# FASCICULE DE BREVET EUROPEEN

(11) **EP 2 162 298 B1**
(45) Date de publication et mention de la délivrance du brevet: **02.01.2013**
(21) Numéro de dépôt: 08758731.7
(22) Date de dépôt: 23.05.2008
(51) Int. Cl.: B60C 1/00, B60C 5/14, B60C 19/12, C08K 3/04, C08L 9/00, C08L 15/02, C08L 21/00, C08L 23/22

(54) **GOMME INTERIEURE DE PNEUMATIQUE**
REIFENINNENSEELE
TYRE INNER GUM

(30) Priorité: 25.05.2007 FR 0703751
(43) Date de publication de la demande: 17.03.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: JOSEPH, Aurélie, F-63400 Chamalières (FR); RIOU, Aline, F-63118 Cebazat (FR); BERRIOT, Julien, F-63730 Les Martres de Veyre (FR); CLADIERE, Julien, F-63100 Clermont-Ferrand (FR)
(74) Mandataire: Cohen, Sylvia
(86) Numéro de dépôt international: PCT/EP2008/004138
(87) Numéro de publication internationale: WO 2008/145314

(56) Documents cités:
- WO-A-2006/047509
- DATABASE WPI Week 200573 Thomson Scientific, London, GB; AN 2005-707657 XP002453865 & JP 2005 263856 A (YOKOHAMA RUBBER CO LTD) 29 septembre 2005 (2005-09-29)
- DATABASE WPI Week 200447 Thomson Scientific, London, GB; AN 2004-490787 XP002453866 & JP 2004 143366 A (BRIDGESTONE CORP) 20 mai 2004 (2004-05-20)
- DATABASE WPI Week 200725 Thomson Scientific, London, GB; AN 2007-242333 XP002453867 & CN 1 861 669 A (YAN X) 15 novembre 2006 (2006-11-15)

## Description

La présente invention est relative à une composition de caoutchouc pour la fabrication d'une couche intérieure de pneumatique imperméable à l'air et couramment appelée « gomme intérieure » de pneumatique.

Les pneumatiques sans chambre à air présentent en effet une surface intérieure de faible perméabilité à l'air afin d'éviter un dégonflage du pneumatique et de protéger les zones internes sensibles de ce dernier contre les arrivées d'oxygène et d'eau, telles que les nappes contenant des câbles métalliques sensibles à l'oxydation, cette protection permettant d'améliorer l'endurance du pneumatique. Aujourd'hui une telle protection de la surface intérieure des pneumatiques est réalisée par des gommes intérieures constituées par des compositions élastomériques à base de caoutchouc butyl.

Mais depuis que les économies de carburant et la nécessité de protéger l'environnement sont devenues une priorité, il est souhaitable de produire des gommes intérieures imperméables à l'air et présentant un poids et une hystérèse aussi faibles que possible, afin d'obtenir une résistance au roulement du pneumatique améliorée. Or les performances en terme d'imperméabilité à l'air des caoutchouc butyl sont liées à une épaisseur minimum non négligeable (de l'ordre du millimètre) et donc à certain poids, qui ne permet pas de répondre efficacement à ces nouvelles exigences.

Ainsi il est nécessaire d'ajouter des charges renforçantes, telles que le noir de carbone, à la composition élastomérique de gomme intérieure pour améliorer son imperméabilité. Cependant en quantité importante, ces charges renforçantes nuisent à certaines propriétés de la composition à la fois à cru : difficulté de mise en oeuvre de la composition crue, appelée couramment « processabilité », à cuit : dégradation de propriétés mécaniques notamment diminution de la résistance à la flexion. L'introduction de plastifiant de type huile permet de pallier ces aspects de mise en oeuvre et de propriétés mécaniques mais pénalise très fortement l'imperméabilité.

Différentes solutions ont été envisagées pour remédier à ces inconvénients en particulier en faisant appel à d'autres types de charges venant s'additionner aux charges renforçantes, souvent connues sous le nom de smectites et en particulier de smectites organophiles. Ces smectites organophiles améliorent les propriétés d'imperméabilité des matériaux si elles sont bien dispersés dans le matériau, c'est-à-dire à la fois une répartition homogène de ces charges au sein du matériau et une bonne comptabilité avec ce dernier. Cette dispersion est souvent difficile à obtenir du fait de la faible compatibilité thermodynamique existant entre les élastomères et de telles charges.

La publication WO 2006/047509 de la demanderesse décrit une composition pour gomme intérieure de pneumatique dont la composition à base de caoutchouc butyl et comprenant du noir de carbone, comporte des charges non renforçantes constituées par des smectites organophiles réduisant la perméabilité aux gaz, dispersées dans la matrice élastomérique ainsi qu'un plastifiant spécifique constitué par une résine terpénique ayant notamment une température de transition vitreuse supérieure, Tg, à 50°C. Cette composition présente effectivement des propriétés mécaniques et d'imperméabilité la rendant acceptable pour une utilisation en tant que gomme intérieure de pneumatique, grâce à l'effet combiné de ces smectites organophiles et de cette résine à haute Tg.

La publication JP 20052263856 décrit une composition pour gomme intérieure de pneumatique comprenant un caoutchouc butyl, du noir de carbone et du graphite et présentant également des propriétés d'imperméabilité améliorées.

La demanderesse a poursuivi ces recherches et a découvert de façon surprenante une composition de caoutchouc pour gomme intérieure de pneumatique à base d'au moins un caoutchouc butyl, une charge renforçante, du graphite et une résine plastifiante hydrocarbonée, qui possède d'aussi bonnes propriétés de processabilité et de résistance en flexion que les compositions de l'art antérieur, et des propriétés améliorées d'imperméabilité aux gaz, et qui permet également d'améliorer de façon significative les propriétés de résistance au roulement et d'endurance sans, bien entendu, que ce soit au détriment d'autres propriétés.

De plus, la demanderesse a constaté de façon surprenante que des résines plastifiantes hydrocarbonées ayant une Tg supérieure à 20°C, et de préférence supérieure à 30°C, permettaient d'obtenir en combinaison avec le graphite, d'aussi bonnes propriétés que pour la combinaison beaucoup plus restrictive des résines de Tg supérieures à 50°C avec les smectites organophiles.

Ainsi l'invention a pour objet une nouvelle composition de gomme intérieure pour pneumatique présentant des propriétés d'imperméabilité encore améliorées par rapport aux solutions précitées ainsi qu'une résistance au roulement améliorée, sans dégradation des propriétés mécaniques de processabilité et de résistance en flexion

L'invention concerne donc une gomme intérieure pour pneumatique, ayant une composition de caoutchouc à base d'au moins un caoutchouc butyl, une charge renforçante et un système plastifiant caractérisé en ce que la composition comprend également du graphite et que le système plastifiant comprend une résine plastifiante hydrocarbonée dont la température de transition vitreuse, Tg, est supérieure à 20°C et dont la température de ramolissement est inférieure à 170°C.

Avantageusement, la matrice élastomérique de la composition de caoutchouc comprend majoritairement un caoutchouc butyl ou majoritairement un coupage de plusieurs caoutchoucs butyl, voire uniquement un caoutchouc butyl ou un coupage de plusieurs caoutchoucs butyl.

Préférentiellement, la charge renforçante comprend du noir de carbone et plus particulièrement avec un taux supérieur à 30 pce.

Selon une caractéristique de l'invention, le taux de résine plastifiante hydrocarbonée est compris entre 2 et 35 pce, et préférentiellement entre 5 et 25 pce.

Selon une autre caractéristique de l'invention, le graphite peut se présenter sous forme de graphite naturel ou synthétique, expansé ou non, ou sous forme d'un un coupage de graphite naturel et/ou de graphite expansé et/ou de graphite synthétique. Le graphite est présent préférentiellement avec un taux compris entre 3 et 50 pce et plus préférentiellement encore entre 5 et 30 pce.

L'invention concerne également un pneumatique comportant une gomme intérieure ayant une composition de caoutchouc à base d'au moins un caoutchouc butyl, une charge renforçante et un système plastifiant caractérisé en ce que la composition comprend également du graphite et que le système plastifiant comprend une résine plastifiante hydrocarbonée dont la température de transition vitreuse, Tg, est supérieure à 20°C et dont la température de ramolissement est inférieure à 170°C.

L'invention concerne encore un procédé pour préparer une composition pour gomme intérieure de pneumatique, à base d'au moins un caoutchouc butyl, une charge renforçante et un système plastifiant, caractérisé en ce que la composition comprend également du graphite et que le système plastifiant comprend une résine plastifiante hydrocarbonée dont la température de transition vitreuse, Tg, est supérieure à 20°C, ledit procédé comportant les étapes suivantes:
- incorporer à un caoutchouc butyl, dans un mélangeur :
- une charge renforçante,
- du graphite,
- un système plastifiant,
en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite :
   - un système de réticulation ;
- malaxer le tout jusqu'à une température maximale inférieure à 110°C.

### I. - MESURES ET TESTS

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### 1-2. Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation. On mesure également la constante de vitesse de conversion notée K (exprimée en min⁻¹), d'ordre 1, calculée entre 30% et 80% de conversion, qui permet d'apprécier la cinétique de vulcanisation.

### I-3. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

### I-4. Perméabilité

Les valeurs de perméabilité sont mesurées en utilisant un « testeur » de perméabilité MOCON OXTRAN 2/60 à 40°C. Des échantillons cuits sous forme de disques d'une épaisseur déterminée (approximativement 0,8 à 1 mm) sont montés sur l'appareil et rendus étanches avec de la graisse à vide. L'une des faces du disque est maintenue sous 10psi d'azote alors que l'autre face est maintenue sous 10 psi d'oxygène. On contrôle l'augmentation de la concentration en oxygène en utilisant un détecteur à oxygène « Coulox » sur la face maintenue sous azote. On note la concentration en oxygène sur la face maintenue sous azote permettant d'atteindre une valeur constante, utilisée pour déterminer la perméabilité à l'oxygène.

Une valeur arbitraire de 100 est donnée pour la perméabilité à l'oxygène du témoin, un résultat inférieur à 100 indiquant une diminution de la perméabilité à l'oxygène donc une meilleure imperméabilité.

### I-5. Tests sur pneumatiques

### A) Résistance au roulement

La résistance au roulement est mesurée sur un volant, selon la méthode ISO 87-67 (1992). Une valeur supérieure à celle du témoin, arbitrairement fixée à 100, indique un résultat amélioré c'est-à-dire une résistance au roulement moindre.

### B) Endurance

L'endurance est mesurée ici par de deux tests : un test charge/vitesse et un test basse pression :
- Le test charge /vitesse correspond à faire tourner un pneumatique gonflé sur un volant avec application d'une charge puis de réaliser une montée en vitesse par palier avec un arrêt d'une durée déterminée à chaque palier jusqu'à la vitesse maximale prévu pour ce type de pneumatique. Ce test et ses conditions de réalisation sont décrits en détails dans l'additif 29 (règlement N°30), révision 2 du 14 juillet 1999 de l'Accord UNECE (United Nations Economic Commission for Europe) de Genève de 1958 intitulé « Accord concernant l'adoption de prescriptions techniques uniformes applicables aux véhicules à roues, aux équipements et aux pièces susceptibles d'être montés ou utilisés sur un véhicule à roues et les conditions de reconnaissance réciproque des homologations délivrées conformément à ces prescriptions ».
- Le test basse pression vérifie qu'après le passage de pneumatiques gonflés pour une vitesse, une durée et une température données, ces derniers ne comportent aucun dommage visible de décollement, rupture ou arrachement de la bande de roulement ou de la carcasse et que la pression de gonflage mesurée au moins une heure après la fin du test n'est pas inférieure à la pression initiale. Ce test est réalisé conformément au règlement fédéral américain FMVSS (Federal Motor Vehicle Safety Standard) 571.139 (édition du 10-01-04) qui s'applique pour les « Pneumatiques neufs qui équipent des véhicules à moteur, autre que les motocyclettes et véhicules à vitesse lente, dont le poids total en charge est inférieur ou égal à 1 0000lbs et fabriqués après 1975 ».

### II. DESCRIPTION DETAILLEE DE L'INVENTION

La composition de caoutchouc selon l'invention, utilisable pour la fabrication de gomme intérieure d'un pneumatique, comporte au moins un caoutchouc butyl, une charge renforçante, du graphite et une résine plastifiante.

Sauf indication expresse différente, les pourcentages indiqués dans la présente demande sont des % en masse.

### II-1. Elastomère ou « caoutchouc »

De façon usuelle, on utilise indifféremment dans le texte les termes « élastomère » et « caoutchouc » qui sont interchangeables.

La composition conforme à l'invention destinée à une gomme intérieure étanche de pneumatique sans chambre contient au moins un caoutchouc butyl, utilisé seul, en coupage avec un ou plusieurs autres caoutchouc butyl ou élastomères diéniques.

Par caoutchouc butyl, on entend un homopolymère de poly(isobutylène) ou un copolymère de poly(isobutylène) avec de l'isoprène (dans ce cas ce caoutchouc butyl fait partie des élastomères diéniques), ainsi que les dérivés halogénés, en particulier généralement bromés ou chlorés, de ces homopolymères de poly(isobutylène) et copolymères de poly(isobutylène) et isoprène.

On citera à titre d'exemples de caoutchouc butyl convenant particulièrement à la réalisation de l'invention : les copolymères d'isobutylène et d'isoprène (IIR), les caoutchoucs bromo-butyl tels que le copolymère bromoisobutylène-isoprène (BIIR), les caoutchoucs chlorobutyl tels que le copolymère chloroisbutylène-isoprène (CIIR) et les caoutchoucs isobutylène.

Par extension de la définition précédente, on incluera également sous l'appellation « caoutchouc butyl » des copolymères d' isobutylène et de dérivés de styrène tels que les copolymères d'isobutylène et méthylstyrène bromé (BIMS) dont fait notamment partie l'élastomère nommé EXXPRO commercialisé par la société Exxon.

Par élastomère ou caoutchouc « diénique », doit être compris de manière connue un (on entend un ou plusieurs) élastomère issu au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha-oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Bien qu'elle s'applique à tout type d'élastomère diéniques, l'homme du métier du pneumatique comprendra que la présente invention est de préférence mise en oeuvre avec des élastomères essentiellement saturés, en particulier du type (d) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur (% molaire) en liaisons -1,2 de la partie butadiénique comprise entre 4% et 65%, une teneur (% molaire) en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans - 1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et -70°C.

Enfin par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

En résumé, le caoutchouc butyl de la composition conforme à l'invention est choisi préférentiellement dans le groupe des élastomères diéniques essentiellement saturés constitué par les copolymères d'isobutène et d'isoprène et leurs dérivés halogénés, cet élastomère essentiellement saturé pouvant être utilisé en coupage avec un élastomère choisi dans le groupe des élastomère diéniques fortement insaturés constitué par les polybutadiènes (en abrégé "BR"), les polyisoprènes (IR) de synthèse, le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

### II-2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

On rappelle ici que par "agent de couplage" on entend, de manière connue, un agent apte à établir une liaison suffisante, de nature chimique et/ou physique, entre la charge inorganique et l'élastomère.

De tels agents de couplage, notamment silice/ élastomère ont été décrits dans un très grand nombre de documents, les plus connus étant des organosilanes bifonctionnels porteurs de fonctions alkoxyle (c'est-à-dire, par définition, des "alkoxysilanes") et de fonctions capables de réagir avec l'élastomère telles que par exemple des fonctions polysulfure.

A titre de charge renforçante, on utilise préférentiellement du noir de carbone dans une proportion supérieure à 30 pce. De préférence le taux de noir de carbone est compris entre 30 et 120 pce, en effet au-delà de ce taux la pénalisation en terme de rigidité de la composition est trop important pour une application en tant que gomme intérieure de pneumatique. Il est clair que des noirs de carbone de grade ASTM très élevé, tel que le noir de carbone N990, sont moins renforçants que des noirs de carbone de grade 700, et à fortiori 600, et qu'il est nécessaire pour un renforcement identique d'utiliser des taux plus importants de noir de carbone s'il s'agit de noirs de carbone de grade 900 que s'il s'agit de noirs de grade 600 ou 700.

Plus préférentiellement la proportion de noir de carbone est comprise entre 30 et 70 pce, c'est en particulier le cas lors de l'utilisation de noirs de carbone de grade ASTM 600 ou 700, et encore plus préférentiellement cette proportion est comprise entre 35 et 60 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents.

Le noir de carbone peut être également utilisé en coupage avec d'autres charges renforçantes et en particulier des charges inorganiques renforçantes telles que décrites précédemment, et en particulier de la silice.

### III-3 Charge de type graphite

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A ; il appartient au groupe cristallin : groupe d'espace P63/mmc.

Le graphite ne peut pas être considéré comme une charge renforçante au sens de la définition précisée dans le paragraphe III-2, cependant il peut être considéré comme une charge semi-renforçante dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
- (a) tout graphite naturel, associé aux roches affectées par le métamorphisme, après séparation des impuretés accompagnant les veines de graphite et après broyage;
- (b) tout graphite naturel expansable thermiquement, i.e. dans lequel est intercalé un composé chimique à l'état liquide, par exemple un acide, entre ses plans de graphène;
- (c) tout graphite naturel expansé, ce dernier étant réalisé en deux temps : intercalation d'un composé chimique à l'état liquide, par exemple un acide, entre les plans de graphène d'un graphite naturel par traitement chimique et expansion à haute température ;
- (d) tout graphite synthétique obtenu par graphitisation de coke de pétrole.

Les compositions de l'invention peuvent -contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non.

On a constaté de façon surprenante que les graphites avec n'importe lequel de ces deux types de morphologie convenaient dans les compositions conformes à l'invention, cependant les graphites présentant une forme lamellaire conviennent préférentiellement, et d'autant plus lorsqu'ils sont orientés de manière a présenter leur plus grande face perpendiculairement au flux de perméation de gaz.

Le graphite est présent dans la composition conforme à l'invention dans des taux allant de 3 pce à 50 pce, et de préférence entre 5 et 30 pce.

En coupage avec le graphite peuvent être utilisées des charges inertes (non renforçantes) telles que particules d'argile, bentonite, talc, craie, kaolin.

### II-4. - Résine plastifiante hydrocarbonée

Les compositions de caoutchouc de l'invention utilisent une résine plastifiante hydrocarbonée dont la Tg, température de transition vitreuse, est supérieure à 20°C et dont la température de ramolissement (en anglais « softening point ») est inférieure à 170°C, comme expliqué en détail ci-après.

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles donc par nature dans les compositions d'élastomère(s) lorsqu'elles sont qualifiées en outre de "plastifiantes".

Elles ont été largement décrites dans les brevets ou demandes de brevet cités en introduction du présent mémoire, ainsi que par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods").

Elles peuvent être aliphatiques, naphténiques, aromatiques ou encore du type aliphatique/naphténique/ aromatique c'est-à-dire à base de monomères aliphatiques et/ou naphténiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :
- une masse moléculaire moyenne en nombre (Mn) comprise entre 400 et 2000 g/mol ;
- un indice de polymolécularité (Ip) inférieur à 3 (rappel : Ip = Mw/Mn avec Mw masse moléculaire moyenne en poids).

Plus préférentiellement, cette résine plastifiante hydrocarbonée présente au moins une, encore plus préférentiellement l'ensemble, des caractéristiques suivantes :
- une Tg supérieure à 30°C ;
- une masse Mn comprise entre 500 et 1500 g/mol ;
- un indice Ip inférieur à 2.

La température de transition vitreuse Tg est mesurée de manière connue par DSC (Differential Scanning Calorimetry), selon la norme ASTM D3418 (1999), et la température de ramolissement (« softening point ») est mesurée selon la norme ASTM E-28.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines de copolymères ci-dessus sont préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère terpène/ vinylaromatique, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre.

A titre de monomère vinylaromatique conviennent par exemple le styrène, l'alpha-méthylstyrène, l'ortho-, méta-, para-méthylstyrène, le vinyle-toluène, le paratertiobutylstyrène, les méthoxystyrènes, les chlorostyrènes, le vinylmésitylène, le divinylbenzène, le vinylnaphtalène, tout monomère vinylaromatique issu d'une coupe C₉ (ou plus généralement d'une coupe C₈ à C₁₀). De préférence, le composé vinyle-aromatique est du styrène ou un monomère vinylaromatique issu d'une coupe C₉ (ou plus généralement d'une coupe C₈ à C₁₀). De préférence, le composé vinylaromatique est le monomère minoritaire, exprimé en fraction molaire, dans le copolymère considéré.

Selon un mode de réalisation plus particulièrement préférentiel, la résine plastifiante hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Les résines préférentielles ci-dessus sont bien connues de l'homme du métier et disponibles commercialement, par exemple vendues en ce qui concerne les :
résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol ; Mw=950 g/mol ; Ip=1,5 ; Tg=70°C) ;
résines de copolymère coupe C₅/ vinylaromatique, notamment coupe C₅/ styrène ou coupe C₅/ coupe C₉ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "ECR 373" ;
résines de copolymère limonène/ styrène : par DRT sous dénomination "Dercolyte TS 105" de la société DRT, par ARIZONA Chemical Company sous dénominations "ZT115LT" et "ZT5100".

Le taux de résine hydrocarbonée est préférentiellement compris entre 2 et 35 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Le taux de résine hydrocarbonée est encore plus préférentiellement compris entre 5 et 25 pce.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques ou produits semi-finis pour pneumatiques, comme par exemple d'autres plastifiants (autres que le système plastifiant de l'invention), de préférence non aromatiques ou très faiblement aromatiques, par exemple des huiles naphténiques, paraffiniques, des huiles MES ou TDAE, des esters (en particulier trioléates) de glycérol notamment des esters naturels tels que huiles végétales de colza ou de tournesol, des pigments, des agents de protection tels que agents anti-ozonants, anti-oxydants, des agents anti-fatigue, un système de réticulation à base soit de soufre, soit de donneurs de soufre et/ou de peroxyde et/ou de bismaléimides, des accélérateurs de vulcanisation, des activateurs de vulcanisation, des agents anti-réversion.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur processabilité à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II-6. Fabrication des compositions de caoutchouc

Les compositions sont fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc pour gomme intérieure de pneumatique, comporte les étapes suivantes :
- incorporer à un élastomère, au cours d'une première étape (dite "non-productive"), au moins une charge renforçant, du graphite et une résine plastifiante hydrocarbonée dont la Tg est supérieure à 0°C, en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (élastomère, charge renforçante et agent de couplage si nécessaire, .graphite et système plastifiant), puis dans un deuxième temps, par exemple après une à deux minutes de malaxage, les autres additifs, éventuels agents de recouvrement ou de mise en oeuvre complémentaires, à l'exception du système de réticulation. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation est préférentiellement un système de vulcanisation à base de soufre et d'un accélérateur. On peut utiliser tout composé susceptible d'agir comme accélérateur de vulcanisation des élastomères en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable comme gomme intérieure de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

L'invention concerne les compositions de caoutchouc précédemment décrites tant à l'état dit "cru" (i.e. avant cuisson) qu'à l'état dit "cuit" ou vulcanisé (i.e. après vulcanisation).

### III- EXEMPLES DE REALISATION DE L'INVENTION

Les exemples qui suivent permettent d'illustrer l'invention, cette dernière ne saurait cependant être limitée à ces seuls exemples.

### Préparation des compositions de caoutchouc

On procède pour les essais de la manière suivante : on introduit dans un mélangeur interne, rempli à 70% et dont la température initiale de cuve ests d'environ 60°C, successivement la charge renforçante, le graphite, le système plastifiant, le caoutchouc butyl ainsi que divers autres ingrédients éventuels à l'exception du système de vulcanisation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore du soufre et un accélérateur type sulfénamide sur un mélangeur externe (homo-finisseur) à 30°C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de gommes intérieures de pneumatique.

### Exemple 1

Cet essai a pour objet de montrer l'amélioration de performance d'une composition selon l'invention par rapport à deux compositions témoins de l'art antérieur à la fois en terme de propriétés de caoutchouterie mais également de roulage en pneumatiques.

### Tests de caoutchouterie

Les trois compositions A, B, C ont été préparées conformément au procédé détaillé dans le paragraphe précédent et ont la même formulation de base suivante où les quantités sont exprimées en pce, parties en poids pour cent parties d'élastomère:

| | |
|---|---|
| Elastomère butyl (1) | 100 |
| Noir de carbone (N772) | 50 |
| Oxyde de zinc | 1,5 |
| Acide stéarique | 1,5 |
| Sulfénamide | 1,2 |
| Soufre | 1,5 |

| | |
|---|---|
| (1) : Polyisobutylène bromé « BROMOBUTYL 2222 » commercialisé par la société EXXON CHEMICAL Co. | |

Les compositions A, B et C sont définies comme suit :
- la composition témoin A est une composition de gomme intérieure de pneumatique « classique » n'incluant pas de graphite,
- la composition témoin B correspond à l'art antérieur de la demande de brevet WO 2006/047509 qui comprend des smectites organophiles et une résine plastifiante hydrocarbonée de Tg conforme aux caractéristiques de ladite demande,
- la composition C conforme à la présente invention comprend du graphite et une résine plastifiante hydrocarbonée dans des taux conformes à l'invention.

Les différences de formulation sont présentées dans le tableau 1 qui suit :

**Tableau 1**

| **Composition N°** | **A** | **B** | **C** |
|---|---|---|---|
| Smectite organophile (2) | - | 14,3 | - |
| Graphite (3) | - | - | 10 |
| Résine plastifiante (4) | - | 10 | 10 |

| | | | |
|---|---|---|---|
| (2) Montmorillonite fonctionnalisée « methyl tallow, bis (2-hydroxyethyl) quaternary amonium » : « CLOISITE 30B » commercialisée par la société Southern Clay (14,3 pce correspondant à 10 pce de montmorillonite et 4,3 pce d'agents tensio-actifs) (3) Graphite naturel « TIMREX 80* 150 » commercialisé par la société TIMCAL (4) Résine polylimonène « SYLVARES 7125 » (Tg=70°C, Temp. de ramolissement = 120°C) commercialisée par la société ARIZONA. | | | |

Les propriétés de caoutchouterie de ces trois compositions sont mesurées avant cuisson et après cuisson à 150°C pendant 60 minutes, les résultats obtenus sont portés sur le tableau 2.

**Tableau 2**

| **Composition N°** | **A** | **B** | **C** |
|---|---|---|---|
| Propriétés avant cuisson | | | |
| Mooney | 65 | 56 | 52 |

| Rhéométrie | | | |
|---|---|---|---|
| Ti (min) | 2,06 | 6,23 | 2,97 |
| K (min⁻¹) | 0,147 | 0,096 | 0,206 |

| Propriétés après cuisson | | | |
|---|---|---|---|
| MA10 (MPa) | 2,7 | 3,5 | 3,0 |
| MA100 (MPa) | 1,04 | 1,20 | 1,04 |
| Contrainte rupture (MPa) | 11,5 | 12,6 | 9,7 |
| Allongement rupture (%) | 712 | 706 | 754 |
| Perméabilité à l'oxygène | 100 | 79 | 71 |

On constate que la composition C conforme à l'invention comprenant du graphite et une résine plastifiante hydrocarbonée présente à l'état cru une bien meilleure processabilité (Mooney plus faible) que les compositions témoins A et B même si la composition B présentait déjà une meilleure processabilité que la composition témoin A ; des propriétés rhéométriques très nettement améliorées par rapport à la composition B (dont les résultats au niveau rhéométrie sont un peu faibles)et légèrement améliorées par rapport à la composition A.

Après cuisson, on constate que les modules et propriétés d'allongement et de contrainte à la rupture de la composition C conforme à l'invention sont globalement équivalentes à celle de la composition témoin A (1a composition B étant globalement moins bonne que la composition A en ce qui concerne ces propriétés). De plus, la composition C conforme à l'invention présente une perméabilité très inférieure à celle de la composition témoin A mais également inférieure à celle de la composition B qui inclut une smectite organophile et une résine plastifiante hydrocarbonée associée précisément pour améliorer l'imperméabilité.

Ainsi la composition C conforme à l'invention incluant du graphite et une résine plastifiante hydrocarbonée permet une amélioration des propriétés d'étanchéité par rapport à des compositions déjà très performantes (composition B) sur cet aspect par rapport aux compositions témoins classique (A) tout en réussissant à maintenir un aussi bon niveau de propriétés de rigidité, donc processabilité et d'énergie à la rupture que ces compositions témoins classiques (A), niveau supérieur à celui des compositions B (dont l'étanchéité est améliorée par rapport à aux compositions classiques A).

### Tests de roulage en pneumatiques

Les compositions A, B et C précédentes ont été testées comme gomme intérieure de pneumatiques tourisme à carcasse radiale, de dimension 195/65 R15 (indice de vitesse H). Elles ont été préparées comme détaillé dans le paragraphe III-1 et calandrées sous forme de gommes intérieures de pneumatique avec différentes épaisseur de sorte à être à iso étanchéité (c'est-à-dire sur la base de l'étanchéité de la composition témoin A) afin de pourvoir comparer dans leurs performances dans des pneumatiques.

On comprendra aisément au vue des résultats du tableau 2 que la gomme intérieure correspondant à la composition « classique » A a une épaisseur supérieure à celle retenue pour la composition conforme à l'art antérieur B et à celle retenue pour la composition C conforme à l'invention.

Les épaisseurs des gommes intérieures et les résultats des mesures effectuées concernant la résistance au roulement sont reportés sur le tableau 3.

**Tableau 3**

| **Composition des Gommes Intérieures** | **A** | **B** | **C** |
|---|---|---|---|
| Epaisseur de la gomme intérieure (mm) | 0,97 | 0,49 | 0,47 |
| Résistance au roulement | 100 | 109 | 115 |

Ces résultats montrent que pour une étanchéité identique, le pneumatique ayant en tant que gomme intérieure la composition C conforme à l'invention incluant du graphite et une résine plastifiante hydrocarbonée présente une résistance au roulement améliorée par rapport aux deux autres pneumatiques correspondant aux compositions témoins A et B. Même s'il est clair pour l'homme du métier que la réduction de l'épaisseur de la gomme intérieure, donc de son poids, est un élément qui va dans le bon sens pour obtenir une diminution de la résistance au roulement, ce résultat effectif d'abaissement de la résistance au roulement ne peut néanmoins pas être attribué à cette seule modification de poids dans le pneumatique. C'est donc à la fois la composition originale de la gomme intérieure C elle-même et ses propriétés d'étanchéité permettant une diminution du poids de la gomme intérieure dans le pneumatique, qui permet d'obtenir cette résistance au roulement pour le pneumatique améliorée.

Le test d'endurance charge/vitesse et le test basse pression pour les trois pneumatiques dont la gomme intérieure est respectivement de composition A, B et C se révèlent positifs c'est-à-dire d'une part pour les trois pneumatiques sont capables d'atteindre la vitesse maximale prévue pour ce type de pneumatique en suivant les paliers réglementaires et qu'ils remplissent à basse pression, les critères concernant l'absence de dommages visibles et le maintien de la pression. On notera que cette validation des critères d'endurance est d'autant plus remarquable pour le pneumatique comportant une gomme intérieure de composition C conforme à l'invention, pour lequel l'épaisseur de la gomme intérieure est très inférieure à celle du pneumatique témoin dont la gomme intérieure comprend la composition « classique » A et qui, néanmoins, n'est pas pénalisé par cette faible épaisseur.

L'amélioration de l'ensemble du compromis de propriétés : étanchéité-endurance-résistance au roulement obtenu pour un pneumatique dont la gomme intérieure a la composition C conforme à l'invention est à la fois tout à fait remarquable et surprenant.

### Exemple 2

Cet exemple a pour objet de montrer l'amélioration des propriétés de caoutchouterie d'une composition selon l'invention C identique à celle de l'exemple 1, par rapport à une composition D correspondant à une composition de base « classique », conforme à la formulation de base de l'ensemble des compositions de l'exemple 1, mais dans laquelle on a ajouté du graphite.

Les deux compositions C et D ont donc été préparées conformément au procédé décrit précédemment, et se distinguent comme suit :
- la composition C conforme à l'invention comprend du graphite et une résine plastifiante hydrocarbonée dans des taux conformes à l'invention,
- la composition témoin D comprend du graphite dans la même proportion que la composition C mais pas de résine.

Les différences de formulation de ces deux compositions sont présentées dans le tableau 4 qui suit :

**Tableau 4**

| **Composition N°** | **C** | **D** |
|---|---|---|
| Graphite (3) | 10 | 10 |
| Résine plastifiante (4) | 10 | - |

| | | |
|---|---|---|
| (3) Graphite naturel « TIMREX 80* 150 » commercialisé par la société TIMCAL (4) Résine polylimonène « SYLVARES 7125 » (Tg=70°C, Temp. de ramolissement = 120°C) commercialisée par la société ARIZONA. | | |

Les propriétés de caoutchouterie de ces deux compositions sont mesurées avant cuisson et après cuisson à 150°C pendant 60 minutes, les résultats sont portés sur le tableau 5.

**Tableau 5**

| **Composition N°** | **C** | **D** |
|---|---|---|
| Propriétés avant cuisson | | |
| Mooney | 52 | 62 |

| Rhéométrie | | |
|---|---|---|
| Ti (min) | 2,97 | 2,82 |
| K (min⁻¹) | 0,206 | 0,144 |

| Propriétés après cuisson | | |
|---|---|---|
| MA10 (MPa) | 3,0 | 4,0 |
| MA100 (MPa) | 1,04 | 1,46 |
| Contrainte rupture (MPa) | 9,7 | 9,0 |
| Allongement rupture (%) | 754 | 607 |
| Perméabilité à l'oxygène | 71 | 77 |

On constate que la processabilité de la composition D n'incluant pas de résine plastifiante hydrocarbonée est moins bonne (valeur Mooney supérieure) que la composition C conforme à l'invention, ce qui est un résultat attendu dans la mesure où les résines sont connues pour permettre une amélioration de la mise en oeuvre des mélanges.

De la même façon on constate dans les propriétés après cuisson l'effet du manque de résine dans la composition D : plus grande rigidité traduite dans les MA pour la composition D que pour la composition C conforme à l'invention mais moins bon comportement à la rupture de D par rapport à la composition C.

Mais de façon tout à fait inattendue, on constate que la composition D n'incluant que du graphite présente une moins bonne imperméabilité que la composition C conforme à l'invention qui comprend du graphite et une résine plastifiante.

Or il est connu que les résines nuisent généralement à l'imperméabilité. Même si l'effet pénalisant est moindre grâce à l'utilisation d'une résine ayant une haute température de transition vitreuse comme c'est le cas pour C, on s'attendrait au mieux à obtenir avec la composition C conforme à l'invention une perméabilité identique à celle de la composition D. Cette amélioration de l'imperméabilité pour la composition C tient clairement à un effet de combinaison surprenant entre le graphite et la résine.

Il apparaît donc clairement que la composition conforme à l'invention permet d'obtenir des propriétés améliorées (processabilité, énergie à la rupture, perméabilité) non seulement par rapport à une composition témoin « classique » (exemple 1) mais également par rapport à une composition incluant en plus de la charge renforçante, du graphite.

### Exemple 3

Cet exemple a pour objet de montrer l'amélioration des propriétés de caoutchouterie de deux compositions conformes à l'invention C et E, C étant identique à l'exemple 1, incluant des résines plastifiantes hydrocarbonées de Tg différentes, par rapport à la composition témoin « classique » A de l'exemple 1.

La composition E correspond à une formulation de base identique à celle de l'exemple 1 et a donc été préparée conformément au procédé décrit précédemment.

Les compositions C et E conforme à l'invention se distinguent l'une de l'autre comme suit :
- la composition C conforme à l'invention comprend du graphite et une résine polylimonène de Tg égale à 70°C dans des taux conformes à l'invention,
- la composition E conforme à l'invention comprend du graphite et une résine plastifiante hydrocarbonée (pure C5) de Tg égale à 49°C dans des taux conformes à l'invention.

Les différences de formulation de ces trois compositions sont présentées dans le tableau 6 qui suit :

**Tableau 6**

| **Composition N°** | **A** | **C** | **E** |
|---|---|---|---|
| Graphite (3) | - | 10 | 10 |
| Résine plastifiante (4) | - | 10 | - |
| Résine plastifiante (5) | - | - | 10 |

| | | | |
|---|---|---|---|
| (4) résine polylimonène « SYLVARES 7125 » (Tg = 70°C, Temp. de ramolissement =120°C), commercialisée par la société ARIZONA (5) résine aliphatique (pure C5) « Hikorez A-1100 », (Tg = 49°C, Temp. de ramolissement 99°C), commercialisée par la société KOLON | | | |

Les propriétés de caoutchouterie de ces compositions sont mesurées avant cuisson et après cuisson à 150°C pendant 60 minutes, les résultats sont portés sur le tableau 7 qui suit.

**Tableau 7**

| **Composition N°** | **A** | **C** | **E** |
|---|---|---|---|
| Propriétés avant cuisson | | | |
| Mooney | 65 | 52 | 53 |

| Rhéométrie | | | |
|---|---|---|---|
| Ti (min) | 2,06 | 2,97 | 2,72 |
| K (min⁻¹) | 0,147 | 0,206 | 0,216 |

| Propriétés après cuisson | | | |
|---|---|---|---|
| MA10 (MPa) | 2,7 | 3,0 | 3,4 |
| MA100 (MPa) | 1,04 | 1,04 | 1,13 |
| Contrainte rupture (MPa) | 11,5 | 9,7 | 9,3 |
| Allongement rupture (%) | 712 | 754 | 710 |
| Perméabilité à l'oxygène | 100 | 71 | 74 |

On fait globalement les mêmes constatations que la comparaison dans l'exemple 1 entre la composition témoin A et la composition conforme à l'invention C, c'est-à-dire que les résultats montent ici pour la composition E conforme à l'invention mais contenant une résine plastifiante hydrocarbonée de Tg 49°C:
- des propriétés avant cuisson améliorées pour la processabilité (Mooney), améliorées ou globalement équivalentes pour la rhéométrie par rapport à la composition témoin A,
- des propriétés après cuisson (déformation, comportement à la rupture) globalement équivalentes à celle de la composition témoin A,
- et une étanchéité nettement améliorée par rapport à la composition témoin A.

On notera que le gain en étanchéité obtenu avec la composition E incluant la résine ayant une Tg de 49°C, est également significatif si on le compare à la composition D de l'exemple 2 dans laquelle il n'y a aucune résine plastifiante.

## Revendications

1. Gomme intérieure pour pneumatique, ayant une composition de caoutchouc à base d'au moins un caoutchouc butyl, une charge renforçante et un système plastifiant **caractérisé en ce que** la composition comprend également du graphite et que le système plastifiant comprend une résine plastifiante hydrocarbonée dont la température de transition vitreuse, Tg, est supérieure à 20°C et dont la température de ramolissement est inférieure à 170°C.

2. Gomme intérieure selon la revendication 1, dans laquelle la matrice élastomérique de la composition de caoutchouc comprend majoritairement un caoutchouc butyl ou majoritairement un coupage de plusieurs caoutchoucs butyl.

3. Gomme intérieure selon la revendication 2, dans la matrice élastomérique de la composition de caoutchouc comprend uniquement un caoutchouc butyl ou un coupage de plusieurs caoutchoucs butyl.

4. Gomme intérieure selon la revendication 2, dans laquelle la matrice élastomérique de la composition de caoutchouc comprend un ou plusieurs autres élastomères diéniques.

5. Gomme intérieure selon l'une quelconque des revendications 1 à 4, dans laquelle le caoutchouc butyl est un copolymère d'isobutène et d'isoprène.

6. Gomme intérieure selon l'une quelconque des revendications 1 à 4, dans laquelle le caoutchouc butyl est un polyisobutylène bromé.

7. Gomme intérieure selon l'une quelconque des revendications 1 à 4, dans laquelle le caoutchouc butyl est un polysisobutylène chloré.

8. Gomme intérieure selon la revendication 4, dans laquelle le caoutchouc butyl est coupé avec un polymère isoprénique.

9. Gomme intérieure selon l'une quelconque des revendications précédentes, dans la charge renforçante comprend du noir de carbone, dont le taux est compris entre 30 et 120 pce.

10. Gomme intérieure selon l'une quelconque des revendications précédentes, dans laquelle la charge renforçante comprend une charge inorganique renforçante.

11. Gomme intérieure selon la revendication 10, dans laquelle la charge renforçante inorganique renforçante est de la silice.

12. Gomme intérieure selon l'une quelconque des revendications précédentes, dans laquelle la résine plastifiante hydrocarbonée a une Tg supérieure à +30°C.

13. Gomme intérieure selon l'une quelconque des revendications précédentes, dans laquelle le taux de résine plastifiante hydrocarbonée est comprise entre 2 et 35 pce.

14. Gomme intérieure selon la revendication 13, dans laquelle le taux de résine plastifiante hydrocarbonée est comprise entre 5 et 25 pce.

15. Gomme intérieure selon l'une quelconque des revendication précédentes, dans laquelle la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

16. Gomme intérieure selon l'une quelconque des revendications 1 à 15, dans laquelle le graphite se présente sous une forme lamellaire.

17. Gomme intérieure selon l'une quelconque des revendications 1 à 16, dans laquelle le graphite est un graphite naturel.

18. Gomme intérieure selon l'une quelconque des revendications 1 à 16, dans laquelle le graphite est un graphite expansé.

19. Gomme intérieure selon l'une quelconque des revendications 1 à 16, dans laquelle le graphite est une graphite synthétique.

20. Gomme intérieure selon l'une quelconque des revendications précédentes, dans laquelle le taux de graphite est compris entre 3 et 50 pce.

21. Gomme intérieure selon la revendication 20, dans laquelle le taux de graphite est compris entre 5 et 30 pce.

22. Pneumatique comportant une gomme intérieure selon l'une quelconque des revendications 1 à 21.

23. Procédé pour préparer une composition pour gomme intérieure de pneumatique, à base d'au moins un caoutchouc butyl, une charge renforçante et un système plastifiant, **caractérisé en ce que** la composition comprend également du graphite et que le système plastifiant comprend une résine plastifiante hydrocarbonée dont la température de transition vitreuse, Tg, est supérieure à 20°C et dont la température de ramolissement est inférieure à 170°C, ledit procédé comportant les étapes suivantes:
- incorporer à un caoutchouc butyl, dans un mélangeur :
- une charge renforçante,
- du graphite,
- un système plastifiant,
en malaxant thermomécaniquement le tout, en une ou plusieurs fois, jusqu'à atteindre une température maximale comprise entre 110°C et 190°C ;
- refroidir l'ensemble à une température inférieure à 100°C ;
- incorporer ensuite :
- un système de réticulation ;
- malaxer le tout jusqu'à une température maximale inférieure à 110°C.

## Claims

1. Tyre inner liner having a rubber composition based on at least one butyl rubber, a reinforcing filler and a plasticizing system, **characterized in that** the composition also includes graphite and **in that** the plasticizing system comprises a hydrocarbon plasticizing resin, the glass transition temperature T_{g} of which is above 20°C and the softening point of which is below 170°C.

2. Inner liner according to Claim 1, in which the elastomeric matrix of the rubber composition comprises predominantly one butyl rubber or predominantly one blend of several butyl rubbers.

3. Inner liner according to Claim 2, in which the elastomeric matrix of the rubber composition comprises only a butyl rubber or a blend of several butyl rubbers.

4. Inner liner according to Claim 2, in which the elastomeric matrix of the rubber composition comprises one or more other diene elastomers.

5. Inner liner according to any one of Claims 1 to 4, in which the butyl rubber is an isobutene/isoprene copolymer.

6. Inner liner according to any one of Claims 1 to 4, in which the butyl rubber is a brominated polyisobutylene.

7. Inner liner according to any one of Claims 1 to 4, in which the butyl rubber is a chlorinated polysisobutylene.

8. Inner liner according to Claims 4, in which the butyl rubber is blended with an isoprene polymer.

9. Inner liner according to any one of the preceding claims, in which the reinforcing filler comprises carbon black which content is between 30 and 120 phe.

10. Inner liner according to any one of the preceding claims, in which the reinforcing filler comprises a reinforcing inorganic filler.

11. Inner liner according to Claim 10, in which the reinforcing inorganic reinforcing filler is silica.

12. Inner liner according to any one of the preceding claims, in which the hydrocarbon plasticizing resin has a T_{g} of above +30°C.

13. Inner liner according to any one of the preceding claims, in which the hydrocarbon plasticizing resin content is between 2 and 35 phe.

14. Inner liner according to Claim 13, in which the hydrocarbon plasticizing resin content is between 5 and 25 phe.

15. Inner liner according to any one of the preceding claims, in which the hydrocarbon plasticizing resin is chosen from the group formed by cyclopentadiene (CPD) or dicyclopentadiene (DCPD) homopolymer or copolymer resins, terpene homopolymer or copolymer resins, C₅-cut homopolymer or copolymer resins and blends of these resins.

16. Inner liner according to any one of Claims 1 to 15, in which the graphite is in a lamellar form.

17. Inner liner according to any one of Claims 1 to 16, in which the graphite is a natural graphite.

18. Inner liner according to any one of Claims 1 to 16, in which the graphite is an expanded graphite.

19. Inner liner according to any one of Claims 1 to 16, in which the graphite is a synthetic graphite.

20. Inner liner according to any one of the preceding claims, in which the graphite liner is between 3 and 50 phe.

21. The inner liner as claimed in Claim 20, in which the graphite content is between 5 and 30 phe.

22. Tyre that includes an inner liner according to any one of Claims 1 to 21.

23. Process for producing a composition for a tyre inner liner based on at least one butyl rubber, a reinforcing filler and a plasticizing system, **characterized in that** the composition also includes graphite and **in that** the plasticizing system comprises a hydrocarbon plasticizing resin, the glass transition temperature T_{g} of which is above 20°C and the softening point of which is below 170°C, said process comprising the following steps:
- of incorporating into a diene elastomer, in a mixer:
- a reinforcing filler,
- graphite and
- a plasticizing system,
by thermomechanically mixing all the ingredients, one or more times, until a maximum temperature between 110°C and 190°C is reached;
- of cooling the mixture down to a temperature below 100°C;
- of then incorporating a crosslinking system; and
- of mixing everything until a maximum temperature below 110°C is reached.

## Patentansprüche

1. Innenseele für Reifen mit einer Kautschukzusammensetzung auf Basis mindestens eines Butylkautschuks, eines verstärkenden Füllstoffs und eines Weichmachersystems, **dadurch gekennzeichnet, dass** die Zusammensetzung außerdem Graphit umfasst und das Weichmachersystem ein Kohlenwasserstoff-Weichmacherharz mit einer Glasübergangstemperatur Tg von mehr als 20°C und einer Erweichungstemperatur von weniger als 170°C umfasst.

2. Innenseele nach Anspruch 1, wobei die elastomere Matrix der Kautschukzusammensetzung hauptsächlich einen Butylkautschuk oder hauptsächlich einen Verschnitt von mehreren Butylkautschuken umfasst.

3. Innenseele nach Anspruch 2, wobei die elastomere Matrix der Kautschukzusammensetzung lediglich einen Butylkautschuk oder einen Verschnitt von mehreren Butylkautschuken umfasst.

4. Innenseele nach Anspruch 2, wobei die elastomere Matrix der Kautschukzusammensetzung ein oder mehrere andere Dienelastomere umfasst.

5. Innenseele nach einem der Ansprüche 1 bis 4, wobei es sich bei dem Butylkautschuk um ein Copolymer von Isobuten und Isopren handelt.

6. Innenseele nach einem der Ansprüche 1 bis 4, wobei es sich bei dem Butylkautschuk um ein bromiertes Polyisobutylen handelt.

7. Innenseele nach einem der Ansprüche 1 bis 4, wobei es sich bei dem Butylkautschuk um ein chloriertes Polyisobutylen handelt.

8. Innenseele nach Anspruch 4, wobei der Butylkautschuk mit einem Isoprenpolymer verschnitten ist.

9. Innenseele nach einem der vorhergehenden Ansprüche, wobei es sich bei dem verstärkenden Füllstoff um Ruß handelt, dessen Gehalt zwischen 30 und 120 phr liegt.

10. Innenseele nach einem der vorhergehenden Ansprüche, wobei es sich bei dem verstärkenden Füllstoff um einen verstärkenden anorganischen Füllstoff handelt.

11. Innenseele nach Anspruch 10, wobei es sich bei dem verstärkenden anorganischen Füllstoff um Kieselsäure handelt.

12. Innenseele nach einem der vorhergehenden Ansprüche, wobei das Kohlenwasserstoff-Weichmacherharz eine Tg von mehr als +30°C aufweist.

13. Innenseele nach einem der vorhergehenden Ansprüche, wobei der Gehalt an Kohlenwasserstoff-Weichmacherharz zwischen 2 und 35 phr liegt.

14. Innenseele nach Anspruch 13, wobei der Gehalt an Kohlenwasserstoff-Weichmacherharz zwischen 5 und 25 phr liegt.

15. Innenseele nach einem der vorhergehenden Ansprüche, wobei das Kohlenwasserstoff-Weichmacherharz aus der Gruppe bestehend aus Homopolymer- oder Copolymerharzen von Cyclopentadien (abgekürzt CPD) oder Dicyclopentadien (abgekürzt DCPD), Terpen-Homopolymer- oder -Copolymerharzen, C5-Schnitt-Homopolymer- oder -Copolymerharzen und Mischungen dieser Harze ausgewählt ist.

16. Innenseele nach einem der Ansprüche 1 bis 15, wobei der Graphit in einer lamellaren Form vorliegt.

17. Innenseele nach einem der Ansprüche 1 bis 16, wobei es sich bei dem Graphit um einen natürlichen Graphit handelt.

18. Innenseele nach einem der Ansprüche 1 bis 16, wobei es sich bei dem Graphit um einen expandierten Graphit handelt.

19. Innenseele nach einem der Ansprüche 1 bis 16, wobei es sich bei dem Graphit um einen synthetischen Graphit handelt.

20. Innenseele nach einem der vorhergehenden Ansprüche, wobei der Graphitgehalt zwischen 3 und 50 phr liegt.

21. Innenseele nach Anspruch 20, wobei der Graphitgehalt zwischen 5 und 30 phr liegt.

22. Reifen mit einer Innenseele nach einem der Ansprüche 1 bis 21.

23. Verfahren zur Herstellung einer Zusammensetzung für eine Reifeninnenseele auf Basis mindestens eines Butylkautschuks, eines verstärkenden Füllstoffs und eines Weichmachersystems, **dadurch gekennzeichnet, dass** die Zusammensetzung außerdem Graphit umfasst und das Weichmachersystem ein Kohlenwasserstoff-Weichmacherharz mit einer Glasübergangstemperatur Tg von mehr als 20°C und einer Erweichungstemperatur von weniger als 170°C umfasst, bei dem man:
- in einem Mischer:
- einen verstärkenden Füllstoff,
- Graphit und
- ein Weichmachersystem
in einen Butylkautschuk einarbeitet, indem man das Ganze ein- oder mehrmals thermomechanisch knetet, bis eine Höchsttemperatur zwischen 110°C und 190°C erreicht ist;
- das Ganze auf eine Temperatur von weniger als 100°C abkühlt;
- dann
- ein Vernetzungssystem
einarbeitet und
- das Ganze bis zu einer Höchsttemperatur von weniger als 110°C knetet.
